# EUROPEAN PATENT SPECIFICATION

(11) **EP 3 569 106 B1**
(45) Date of publication and mention of the grant of the patent: **31.08.2022**
(21) Application number: 18172052.5
(22) Date of filing: 14.05.2018
(51) Int. Cl.: A47C 7/46, B60N 2/64, B60N 2/66, B60N 2/90, A47C 7/44

(54) **SUSPENSION MAT FOR INTEGRATION INTO A VEHICLE SEAT**
AUFHÄNGUNGSMATTE ZUM EINBAU IN EINEN FAHRZEUGSITZ
TAPIS DE SUSPENSION POUR UNE INTÉGRATION DANS UN SIÈGE DE VÉHICULE

(43) Date of publication of application: 20.11.2019
(73) Proprietor: FICO CABLES LDA, 4470-263 Vermoim-Maia (PT)
(72) Inventor: DE CASTO FARIA, Manuel António, 4470-263 Vermoim-Maia (PT); DA SILVA LOPES, Pedro João, 4470-263 Vermoim-Maia (PT)
(74) Representative: Mader, Joachim

(56) References cited:
- WO-A1-2009/012844
- DE-U1- 20 301 592

## Description

### 1. Technical field

The present invention relates to a suspension mat for integration into a vehicle seat. The invention further relates to a backrest support for integration into a vehicle seat comprising said suspension mat, and methods for manufacturing a suspension mat for integration into a vehicle seat.

### 2. Prior art

In a vehicle seat, typically, a backrest support is integrated into a backrest of the vehicle seat. The backrest support functions as a support pad for the above arranged cushioning of the vehicle seat and as a support for a passenger sitting in the vehicle seat. Thereby, the backrest support provides support and comfort for the passenger while in a driving position with the aim to minimize any discomfort of the passenger even after several hours of driving. Thus, the backrest support has to comply with a function required by the passenger.

A favorable functioning of the backrest support is commonly evaluated in the development phase of the backrest support and parameters are set that influence the structure of the backrest support. As a result, the structure of the backrest support can be a fixed configuration or an adjustable configuration.

The fixed configuration essentially comprises a suspension mat that is suspended into a frame of the vehicle seat. Thereby, the shape and suspension or cushioning properties or the backrest support cannot be changed by the passenger afterwards, i.e. they are fixed.

In an adjustable configuration the backrest support can be adjusted by a passenger also after installation of the backrest support into the vehicle seat. To this end, the backrest support can comprise a suspension mat with an adjustable lumbar support system. Thereby, the lumbar support system is arranged in the lumbar region of the sitting passenger and can change the shape and cushioning properties, e.g. the stiffness, of the backrest support, and thus the seating experience for a passenger in the vehicle seat, in said lumbar region.

For a lumbar support system there are, typically, three different adjustment methods available: A manual and an electric mechanical adjustment method, wherein the adjustment of the lumbar support is mechanically obtained by a change of the shape of the suspension mat by means of length adjustments of adjustment cables, in particular Bowden cables, connected to the suspension mat. Furthermore, there is also a pneumatic method, wherein the adjustment of the lumbar support is obtained by inflation or deflation, thus a change of the shape, of an air bladder of the pneumatic lumbar support system. Thereby, for the pneumatic lumbar support system a stiff suspension mat is used.

Nowadays, there exists a variety of suspension mat configurations for fixed and adjustable configurations. Thereby, a suspension mat can be build from flexible wires, injection-molded plastics or from a combination of a wire structure with a plastic elements. The design of the suspension mat should comply with the OEM's comfort and robustness requirements, noise levels and mounting preferences.

The document WO 2009/012844 A1 discloses a suspension mat for a seat of a motor vehicle, comprising a single plane support element and a metallic mounting wires, wherein the support element consists of a plastic material injection molded around the mounting wires.

The document DE 203 01 592 U1 discloses a lumbar support for a backrest of a seat. The lumbar support comprises a suspension plate being adjustable in curvature and/or height position. The suspension plate is mounted to a support structure made of vertical metal wires and horizontal plastic webs.

Up to now, for each of the above-mentioned types of backrest support systems, i.e. without a lumbar support system and for each kind of lumbar adjustable support system, a different suspension mat including a unique manufacturing process was necessary in order to obtained suspension mats particularly adapted to the desired backrest support. Such individual suspension mats and corresponding manufacturing processes are cost-intensive and elaborate. However, due to the different design requirements for each backrest support with regards to the mountings of the lumbar support systems, and a desired flexibility of the suspension mat and a desired stiffness of the suspension mat, any simplification and standardization of the suspension mat and its manufacturing process did not appear realistic.

It is the problem of the present invention to provide a suspension mat, a backrest support and a method of manufacturing a suspension mat that complies with the above-mentioned requirements and constraints and overcomes the above mentioned drawbacks.

### 3. Summary of the invention

The problem is solved by a suspension mat according to claim 1, a backrest support according to claim 7, methods of manufacturing a suspension mat according to claims 8 and 11.

Particularly, the problem is solved by a suspension mat for integration into a vehicle seat, comprising a set of wire springs, a plastic plate, over-molded over the wire springs, and first plastic attachment means integrally formed with the plastic plate for mounting a bladder of a pneumatic lumbar support system.

The suspension mat of the present invention forms a basic structure for all four types of the above-mentioned backrest support systems, i.e. a backrest support with a sole suspension mat in the fixed configuration and a backrest support with a suspension mat with one of the proposed three lumbar support systems. Thus, this suspension mat is universally usable for different types of lumbar support systems and even without such a lumbar support system. Furthermore, the suspension mat comprising wire springs with an over-molded plastic plate is easy to manufacture and requires only one over-molding form and processing. This is cost-effective and time-saving.

Moreover, because also first plastic attachment means are integrally formed with the plastic plate it is also possible to connect a pneumatic lumbar support system to the plastic plate which broadens the application of the suspension mat and facilitates its integration into vehicle seats due to the same suspension mat structure.

All in all, the present suspension mat can be used as it is for a pure suspension mat function, or as a suspension mat for integration with a pneumatic lumbar support system, or as an adjustable suspension mat in combination with a manually or electrically actuated lumbar support system.

The at least two wire springs extend over the width of the plastic plate and form attachment hooks for suspending the suspension mat into a vehicle seat frame. By the use of said attachment hooks the suspension mat is securely suspended into the frame of a vehicle seat. Furthermore, the integration of the suspension mat into a seat frame is facilitated by the attachment hooks in that quick manual mounting is possible.

Moreover, in that the wire springs are over-molded with the plastic plate and simply extend over the width of the plastic plate, the wire springs are robustly connected to the plastic plate to endure large press forces applied from a passenger of the seat to the backrest, e.g. during acceleration of the vehicle. Thereby, the manufacturing of the suspension mat is facilitated because additional mounting steps of attachments means for securing the suspension mat in the vehicle seat are omitted.

Preferably, only two wire springs extend over the width of the plastic plate and at least one central wire spring does not extend over the width of the plastic plate such that Bowden cables of a manual or electric lumbar support system can be attached to the suspension mat. This configuration of the suspension mat is used in combination with a manual or electric lumbar support system. Thereby, the wire spring connections of the suspension mat with the seat frame are replaced in the lumbar region by Bowden cable connections. Thus, an adjustment of the shape of the suspension mat via the Bowden cables is possible. This replacement is an easy way to enable an application of a manual or electric lumbar support system with the present suspension mat.

Preferably, the first attachment means comprise a living hinge with a moving part that is pivotable around 180° from a receiving position to a mounting position. Thereby, a living hinge is a space-saving attachment means due to its flat shape in one of the above-mentioned positions. Furthermore, the living hinge can be used to attach an element, preferably a bladder of a pneumatic lumbar support, to the plastic plate quickly and manually. Said kind of attachment is furthermore releasably such that the attached object can be removed easily without the use of any tool. Moreover, due to the fact that the living hinge is an integral part of the plastic plate, no additional attachment means are necessary and no items can get lost during installation. Finally, the attachment is secure because an unwanted opening is not possible since the moveable part of the living hinge, in particular a latching means of the living hinge, is arranged in a recess when in the mounting position.

Preferably, the suspension mat further comprises at least a pair of plastic terminals integrally formed with the plastic plate on opposing sides of the plastic plate for mounting conduit ends of Bowden cables of a manual or electric lumbar support system.

Furthermore, because said plastic terminals are integrally formed with the plastic plate the terminals are easy to manufacture without additional mounting steps and the terminals are robustly connected to the plastic plate to endure high tension forces that are, for example, applied to connected Bowden Cables.

Preferably, the terminals comprise a cylinder-shaped receptacle and a slot along their length for mounting the conduit and cable of the Bowden cables. The cylinder-shaped receptacle and the slot enable an easy and manual mounting of a Bowden cable to the terminal and plastic plate, respectively. Thereby, the conduit of the Bowden cable is secured in its position by the receptacle while the cable of the Bowden cable can be easily inserted through the slot for a further connection with the seat frame. The terminal then provides the necessary counter force when a pulling force is applied to the cable of the Bowden cable to operate the Bowden cable.

Preferably, the suspension mat further comprises injection-molded hook-shaped second attachment means for securing the conduits of the Bowden cables of the manual or electric lumbar support system to the plastic plate. These second attachment means can be easily manufactured while the plastic plate is injection-molded which saves time and additional manufacturing steps. The hook-shape of the second attachment means enables an easy manual securing and releasing of the conduits of the Bowden cables of a mechanical lumbar support to the plastic plate. When the conduits of the Bowden cables are secured to the plastic plate, the installation of the backrest support is facilitated because no cables dangle freely and potentially get caught unwanted by some other object or worker during installation.

Preferably, the suspension mat comprises a dorsal region that is extendable along the width of the plastic plate and a lumbar region that is not extendable along the width of the plastic plate. Thereby, the dorsal region provides an intrinsic flexibility to resilient any applied force of the passenger. The lumbar region, however, provides a plastic plate that is either stiff and flat in case a suspension mat without a lumbar support system or with a pneumatic lumbar support system, only, is used, or that is stable and can be bent to form a desired convex shape in case a manual or electric lumbar support system is used. In each case, however, any uncontrollable deflection of the plastic plate in the lumbar region is avoided in order to ensure a proper functioning of the lumbar support system. Thereby, proper functioning means that the shape of the backrest support and its cushioning and suspension properties, respectively, are only defined by the lumbar support system and can, thus, precisely controlled by said system.

In subdividing the plastic plate into a dorsal and lumbar region with the above-mentioned different flexibility properties the suspension mat can be used as a suspension and support, respectively, for the whole backrest. A suspension mat that has to be assembled from, for example, two different parts prior to integration into a vehicle seat is dispensable. This saves production time and costs and facilitates the installation of the suspension mat.

The above-mentioned problem is also solved by a backrest support for integration into a vehicle seat, the backrest support comprising a suspension mat and a pneumatic lumbar support system at least comprising a bladder and a pump unit for providing pressurized air to the bladder, wherein the bladder is attached to the suspension mat by means of the first plastic attachment means, or a manual lumbar support system at least comprising a main manual device for adjusting Bowden cables and two Bowden cables, wherein conduit ends of the Bowden cables are attached to the suspension mat by means of the plastic terminals, or an electric lumbar support system at least comprising a main electric device for adjusting Bowden cables and two Bowden cables, wherein the conduit ends of the Bowden cables are attached to the suspension mat by means of the plastic terminals.

The backrest support of the present invention uses the same suspension mat as basic structure and is integrated into a vehicle seat with the suspension mat only, or a combination of the suspension mat with one of the above-mentioned lumbar support systems. Thereby, the manufacturing of the backrest support is speed-up and facilitated. Furthermore, the suspension mat provides all necessary mounting features for all three kinds of lumbar support systems while none of said mounting features does hinder any attachment of one of the other lumbar support system.

The above-mentioned problem is also solved by a method of manufacturing a suspension mat for integration into a vehicle seat, the method comprising the following steps:
Providing a set of wire springs,
Over-molding the wire springs with a plastic material to form a plastic plate, such that extensions of the wire springs extend over the plastic plate; and
After the molding step, bending end portions of the extensions to form hooks for suspending the suspension mat within a vehicle seat frame.

In that the extensions of the wire springs are bend after the molding step, the molding is facilitated and speed-up. No individual molding forms, e.g. for differently bend spring wires, are necessary anymore. Further, the extensions can be bent such that they comprise a determined angle in respect to the plastic plate.

Moreover, the bending of the wire spring extensions is then individually adapted to the configuration of the vehicle seat and the applied lumbar support system. This step is completely independent of the molding procedure which is more effective in view of work flow planning.

After bending the extensions of the wire springs, the suspension mat is ready for integration into a vehicle seat or mounting a lumbar support system to the suspension mat and integrating both into a vehicle seat. Thus, the manufacturing comprises a fix and straightforward number of production steps which facilitates the manufacturing process.

Preferably, the method further comprises the step of, simultaneously to the over-molding of the wire springs, over-molding the extensions of the wire springs with a plastic material to form a plastic cover of the extensions.

The covering of the extensions with a plastic material prevents the generation of noise when the extensions move against the vehicle seat frame which normally comprises a metal structure. Up to now, such a covering of the extensions was obtained by mantling a plastic sheath onto the extensions, which is a time consuming and difficult procedure. The over-molding of the extensions by a plastic material, simultaneously with the injection-molding of the plastic plate is a quick and easy way to obtain such a cover of the extensions.

Preferably, the method further comprises the steps of, simultaneously to the over-molding of the wire springs, injection-molding of a plastic material to form plastic terminals for mounting conduit ends of Bowden cables to the suspension mat, and simultaneously to the over-molding of the wire springs, injection-molding of a plastic material to form first plastic attachment means for mounting at least one bladder of a pneumatic lumbar support system to the suspension mat.

The above-mentioned problem is also solved by a method of manufacturing a suspension mat for integration into a vehicle seat, the method comprising the following steps:
providing a set of wire springs,
over-molding the wire springs with a plastic material to form a plastic plate, and
simultaneously to the over-molding step above, injection-molding of a plastic material to form first plastic attachment means for mounting at least one bladder of a pneumatic lumbar support system to the suspension mat.

The simultaneous over-molding of the wire springs and the injection-molding of the first plastic attachment means save time and production steps which reduces in the end the overall manufacturing costs.

Preferably, the method further comprises the step of cutting a wire spring essentially to the width of the plastic plate for replacing the corresponding suspension by Bowden cables. The cutting step can be easily performed either by a machine or manually. Furthermore, some still existing small extensions of the cut wire springs can be folded along the length of the suspension mat such that they do not protrude from the suspension mat, reliably attach the wire spring to the plastic plate and do not pose the risk of injuries.

Preferably, the step of cutting a wire spring is performed prior to the molding steps and the cut ends of this wire spring are over-molded with the plastic plate. Performing the step of cutting a wire spring prior to the molding steps has the advantage that the wire spring end is well attached to the plastic plate and can introduce high forces into it. Further the wire spring end is securely hidden in the over-molded plastic. This is beneficial for aesthetic reasons and avoids injuries with an open-lying cut wire spring that might be sharp.

Preferably, the method is further comprising the step of clipping the at least one bladder of the pneumatic lumbar support system to the suspension mat by pivoting a moving part of the first plastic attachment means around 180° from a receiving position to a mounting position. Such an attachment is easy, releasable and can be performed manually by a worker without the use of any tools.

Preferably, the method is further comprising, simultaneously with the step of over-molding the wire springs with a plastic material to form a plastic plate, the step of injection-molding a plastic material to form second plastic attachment means for securing conduits of the Bowden cables to the suspension mat and / or injection-molding of a plastic material to form plastic terminals for mounting conduit ends of Bowden cables to the suspension mat. The simultaneous molding of said second plastic attachment means and plastic terminals, again, saves production time and additional manufacturing steps. Furthermore, since all molding steps are performed with the same plastic material it is effective to conduct all mentioned molding steps simultaneously in one molding form.

### 4. Short description of the drawings

In the following, preferred embodiments of the invention are disclosed by reference to the accompanying figures, in which shows:
- Fig. 1: an illustrative vehicle seat;
- Figs. 2a, 2b: an embodiment of a suspension mat in a front view (Fig. 2a) and a rear view (Fig. 2b);
- Figs. 3a, 3b: an embodiment of a backrest support comprising an embodiment of a manual lumbar support system in a front view (Fig. 3a) and a rear view (Fig. 3b);
- Figs. 4a, 4b: an embodiment of a backrest support comprising an embodiment of an electric lumbar support system in front view (Fig. 4a) and rear view (Fig. 4b);
- Fig. 5: an embodiment of a backrest support comprising an embodiment of a pneumatic lumbar support system in front view;
- Figs. 6a - 6c: a partial view of an embodiment of a terminal in a rear view (Figs. 6a, 6) and a perspective rear view (Fig. 6c);
- Figs. 7a, 7b: a schematic illustration of an embodiment of first plastic attachment means in a cross-sectional view (Fig. 7a) and a perspective view (Fig. 7b);
- Fig. 8: a detailed perspective view of an embodiment of second plastic attachment means; and
- Figs. 9a, 9b: a perspective view of an embodiment of a suspension mat with flat wire spring extensions (Fig. 9a) and bend wire spring extensions (Fig. 9b).

### 5. Detailed description of preferred embodiments

In the following, preferred embodiments of the invention are described in detail with respect to the figures.

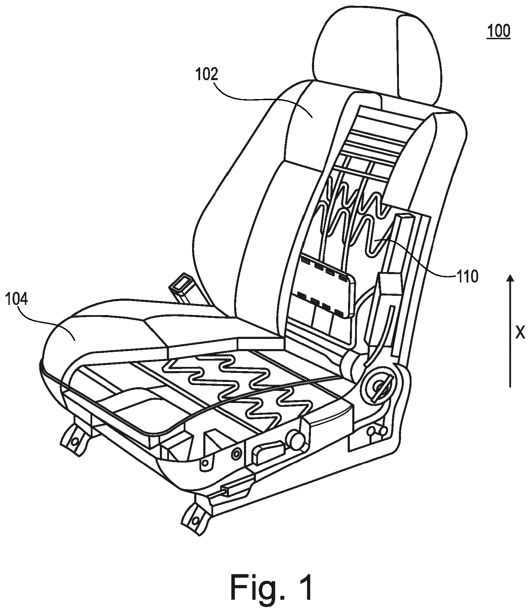

Fig. 1 shows a symbolic illustration of a vehicle seat 100 comprising a backrest 102 and a seating area 104. A passenger sitting in the vehicle seat 100 is sitting on the seating area 104 and leans with its back against the backrest 102. Thereby, the backrest 102 is a support for the passenger, in particular during acceleration of the vehicle in forward driving direction. In order to provide a proper and reliable support, the backrest 102 comprises an integrated backrest support 110. A symbolic illustration of a backrest support 110 is partially shown in Fig. 1 but is normally covered by the cushioning of the vehicle seat 100.

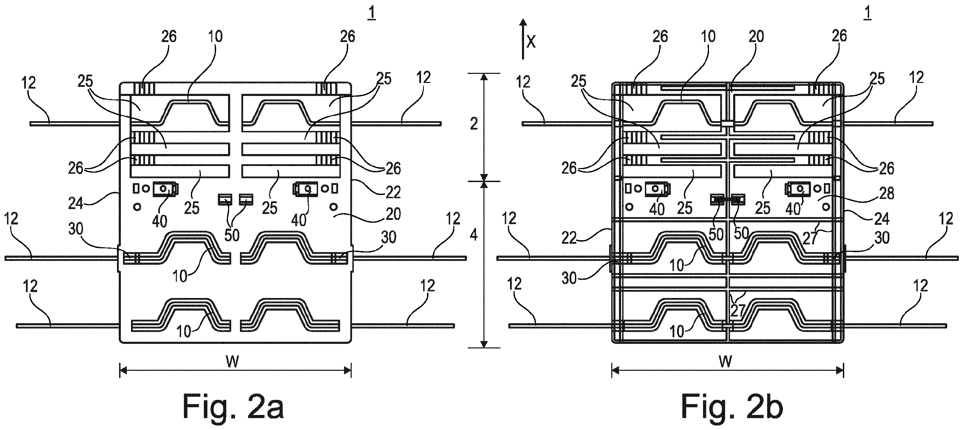

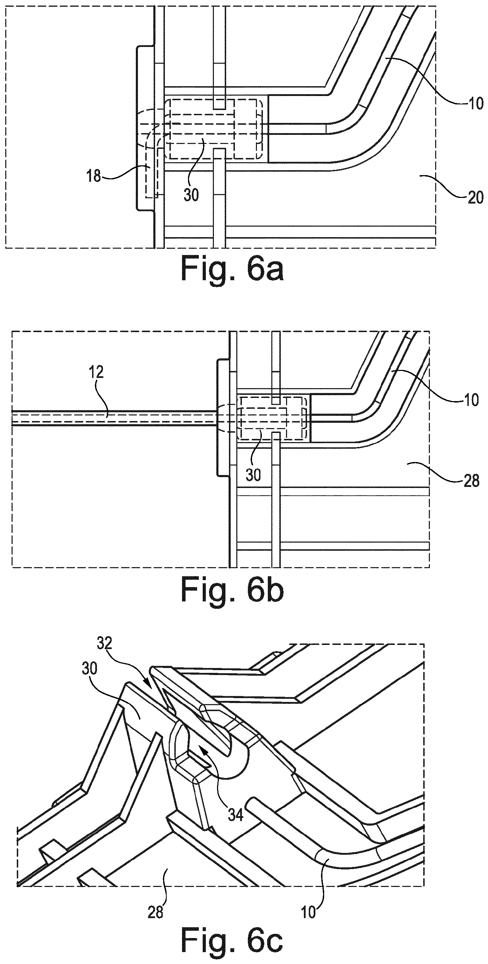

Figs. 2a and 2b show an embodiment of a suspension mat 1 that forms a basic structure of a backrest support 110. The suspension mat 1 enables the desired support of the backrest support 110 in that, in the installed state, a set of wire springs 10 is suspended across a frame structure of the vehicle seat 100 and the wire springs 10 are connected with each other by means of a plastic plate 20 to form a stable suspension mat 1**.** A permanent connection between the wire springs 10 and the plastic plate 20 is achieved by over-molding the plastic plate 20 onto the wire springs 10 (see e.g. Figs. 6a - 6c). The wire springs 10 are preferably made of metal and comprise a round or flat rectangular shape. In a preferred embodiment all wire springs 10 comprise the same shape and length for facilitating the manufacturing process. The number of wire springs 10 can be arbitrary, however, a smaller number of wire springs 10 is more cost and assembly efficient. In the embodiment of Figs. 2a and 2b the number of wire springs 10 is three to obtain a suspension in an upper, central and bottom region of the vehicle seat 100 frame.

For the connection of the suspension mat 1 to the frame structure of the vehicle seat 100, at least two, preferably three, of the wire springs 10 extend over the width W of the plastic plate to form extensions 12 having attachment hooks 14 at the ends.The plastic plate 20 is made of any known plastic material suitable for injection-molding. The plastic plate 20 is preferably rectangular and the size of the plastic plate 20 is a little bit smaller than the inner space of the frame of the vehicle seat 100 such that the plastic plate 20 essentially covers all the space inside the vehicle frame but does not touch the frame of vehicle seat 100 in the installed state.

Moreover, the plastic plate 20 comprises a dorsal region 2 and a lumbar region 4**.** The dorsal region 2 is on the upper side of the plastic plate 20, seen in vertical direction X in which the vehicle seat 100 will be finally mounted into a vehicle. Thereby, the dorsal region 2 essentially supports a shoulder region of passenger sitting in the vehicle seat 100. The lumbar region 4 is arranged below the dorsal region 2 in vertical direction X and supports the corresponding lumbar region of a passenger.

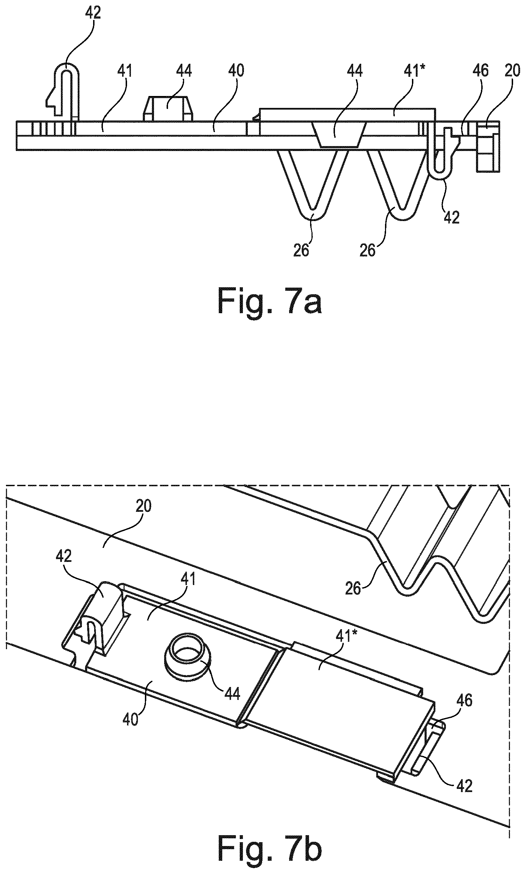

In the dorsal region 2 there are several small portions comprising ripples 26. The ripples 26 are made of molded plastic comprising a ripple structure (see e.g. Figs. 7a, 7b). These ripples 26 enable a stretching of the plastic plate 20 along its width W and enable a deflection of the plastic plate 20 to its back when a force is applied from the front, e.g. from a passenger during an acceleration of the vehicle. Thereby, the number, position and length of the ripples 26 determines the flexibility of the plastic plate 20 in the dorsal region 2. As a rule, the larger the number or length of the ripples 26, the larger the flexibility of the suspension mat 1 in the dorsal region 2. Said flexibility in the dorsal region 2 is further increased by larger openings 25 around the upper most wire spring 10 and additional openings in the dorsal region 2.

The lumbar region 4 does not provide any ripples 26 because in this region said flexibility is not desired. Furthermore, the lumbar region 4 does not comprise any larger or additional openings 25 for the same reason. The lumbar region 4 is either a stiff and flat region or a stable and bendable region providing a convex shape of the plastic plate 20. In order to provide the desired stiffness but to still enable a bending of the plastic plate 20, small stabilizers 27 are arranged across the back side 28 of the plastic plate 20, in particular in the lumbar region 4.

At a central area, the plastic plate 20 comprises attachment means for all three lumbar support systems, namely a manual lumbar support system 70, an electric lumbar support system 80 and a pneumatic lumbar support system 90. There are terminals 30 at or near by one of the wire springs 10, preferably the central wire spring 10, for attaching the Bowden cables 60 of the manual and electric lumbar support system 70, 80. Furthermore, there are first plastic attachment means 40 for attaching at least one bladder 94 of a pneumatic lumbar support system 90. And there are second plastic attachment means 50, essentially on the back side 28 of the plastic plate 20 for attaching the conduits 64 of the Bowden cables 60 of the manual and electric lumbar support system 70, 80. All attachment means 30, 40, 50 are made of plastic and are integrally formed with the plastic plate 20 during the molding steps.

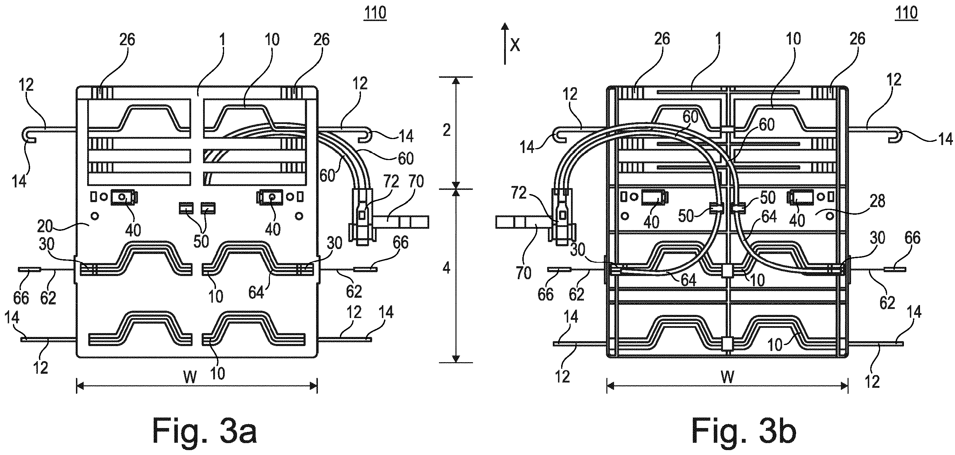

Figs. 3a and 3b show an embodiment of a backrest support 110 with a manual lumbar support system 70. Thereby, the suspension mat 1 is essentially the same as in the embodiment of Figs. 2a and 2b. The major differences between the embodiments of Figs. 2a, 2b and Figs. 3a, 3b are the manual lumbar support system 70 that is attached to the suspension mat 1 and the replacement of the extensions 12 of the central wire spring 10 by the hooks 66 and cables 62 of the Bowden cables 60 of the manual lumbar support system 70 (see Figs. 3a, 3b).

The manual lumbar support system 70 is preferably arranged on the back side 28 of the plastic plate 20 such that it cannot be perceived by the passenger and create any discomfort. The main manual device 72 of the manual lumbar support system 70 can be arranged arbitrarily in the vehicle seat 100, preferably at a lateral side such that a passenger can manually control the lumbar support system 70.

Furthermore, as said above, the extensions 12 of the central spring wire 10 are replaced by hooks 66 and cables 62 of the Bowden cables 60, thus, the suspension mat 1 is suspended to the vehicle seat 100 frame in this region by the Bowden cables 60. In the manual lumbar support system 70 shown in Figs. 3a, 3b two Bowden cables 60 are arranged and can operate simultaneously at both lateral sides 22, 24 of the plastic plate 20 to adjust the curvature of the lumbar region 4 of the plastic plate 20. Thereby, in operation the length of each cable 62 of a Bowden cable 60 can be varied, i.e. elongated or shortened, according to a desired bending or convex shape of the plastic plate 20. In order to shorten the cables 62 a passenger manually rotates a winding-up roller inside the main manual device 72 of the manual lumbar support system 70 in the corresponding rotation direction to wind-up the cables 62. The shorter the cables 62 of the Bowden cables 60 are, the more bend or convex is the plastic plate 20 in direction to the passenger, i.e. in direction to the front of the plastic plate 20. To flatten the suspension mat 1 the passenger has to rotate the winding-up roller in the opposite direction.

During shortening of the cables 62 of the Bowden cables 60 the respective counter force is applied from the conduit 64 to the plastic plate 20 via terminals 30 and results in a bending of the plastic plate 20 with the convex front in the passenger's direction to increase the support of the passenger's back in the lumbar region 4. Thereby, for a secure and reliable force transmission at the terminals 30 each conduit 64 end is inserted into a receptacle 34 of a terminal 30 and the corresponding cable 62 of the Bowden cable 60 is inserted and routed through the terminal 30 by the corresponding slot 32 (see in particular Fig. 6c). This fixation of the Bowden cables 60 at terminals 30 can be done manually and provides a reliable connection between a Bowden cable 60 and the plastic plate 20, i.e. the suspension mat 1.

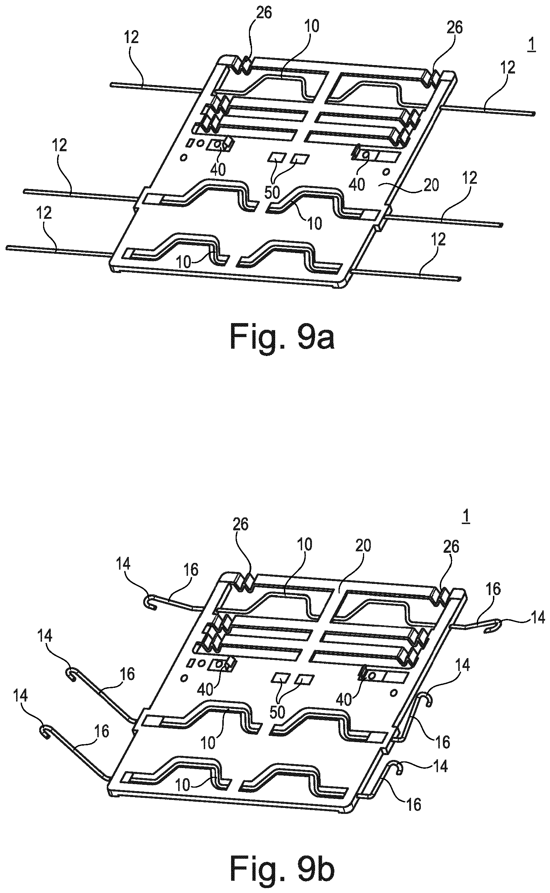

Moreover, the remaining extensions 12 of the wire springs 10, at the top and bottom in Figs. 3a, 3b, are bend to form hooks 14 ready for integration of the backrest support 110 into a vehicle seat 100 frame. The hooks 14 of the upper wire spring 12 are preferably arranged essentially in the plane of the suspension mat 1. The hooks 14 of the lower wire spring 12 are preferably arranged essentially perpendicularly to the plane of the suspension mat 1. The hooks 66 at the cables 62 of the Bowden cables 60 allow for an easy integration into said vehicle seat 100 frame. In addition, the extensions 12 may preferably bend in a specific angle to the plane of the suspension mat 1 as it can be seen in Fig. 9a. Preferably, the bent extensions 16 of one suspension mat 1 may comprise different angles. In the shown embodiment the upper extensions 16 have a smaller bending angle to the plane of the suspension mat the lower extensions 16. Thereby, the overall shape and position of the suspension mat 1 within the seat 100 can be adjusted.

The wire spring without the extension 12, i.e. where the extension 12 is cut off such that the length of this wire spring 10 is essentially the width W of the plastic plate 20 is in particular shown in Fig. 6a. Thereby, the length of the wire spring 10 can be slightly larger than the actual width W, but the protruding portion of the cut wire spring 10 is bend along one of the first and second lateral sides 22, 24 of the plastic plate 20. In case this wire spring is cut and bend prior to any molding step, the cut and bend wire section 18 is also over-molded during the over-molding of the set of wire springs 10. This has the advantage that the cut and bend wire section 18 covered with plastic is hidden from view and does not poses the risk of injuries.

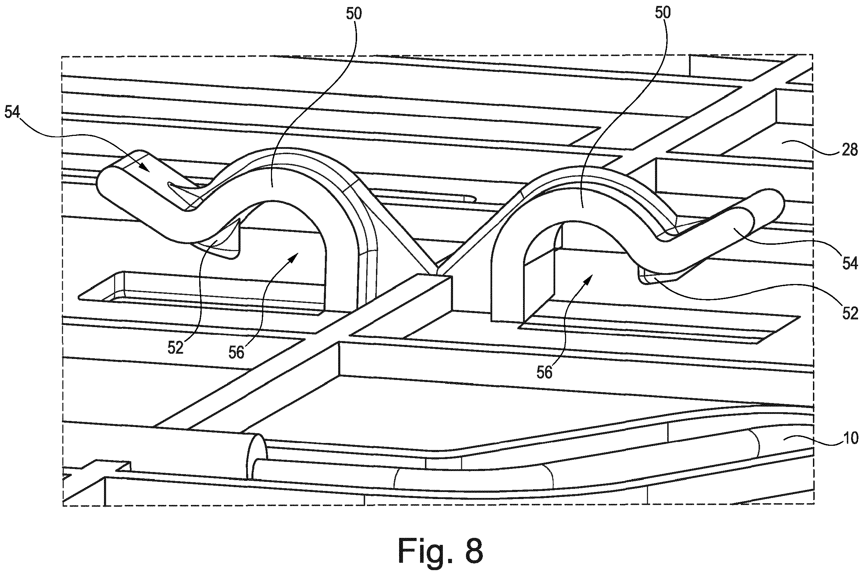

Finally, the conduits 64 of the Bowden cables 60 are secured at the back side 28 of the plastic plate 20 by means of second plastic attachment means 50. The second plastic attachment means 50 comprise a hook-shaped form as can be seen best in Fig. 8. For securing a conduit 64 to one of the second plastic attachment means 50 the conduit 64 is pressed sideways into the conduit receptacle 56 wherein the upper hook-shaped part slightly flexes away from the plastic plate 20. When the conduit 64 is fully inserted into the conduit receptacle 56 the conduit 64 is secured by the securing nose 52. In order to release the conduit 64 from the second plastic attachment means 50, a worker simply lifts the release nose 54 manually away from the plastic plate 20 and frees the conduit 64 to the side. Thus, an easy mounting and dismounting of conduits 64 of Bowden cables 60 is provided.

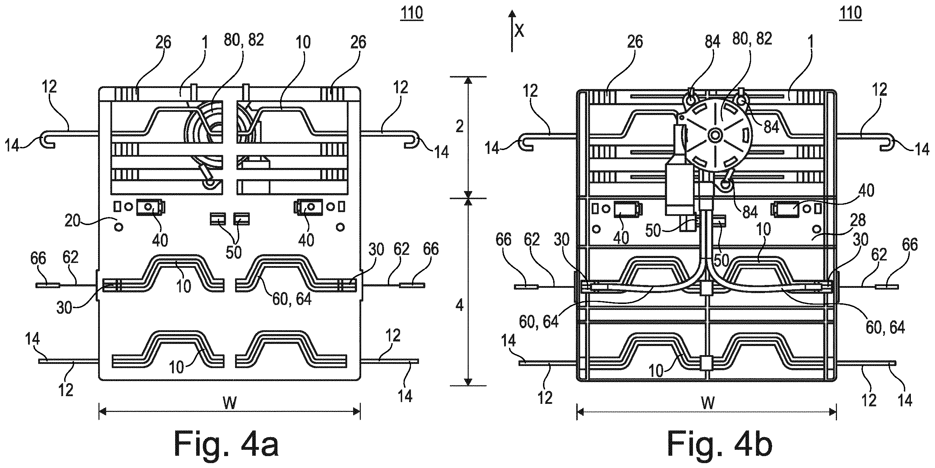

Figs. 4a and 4b show another embodiment of a backrest support 110 comprising an electric lumbar support system 80. Thereby, the suspension mat 1 is the same as in the embodiment with the manual lumbar support system 70 of Figs. 3a, 3b. The difference in Figs. 4a, 4b is that the main manual device 72 is replaced by a main electric device 82 that performs the length adjustment of the cables 62 of the Bowden cables 60.

The main electric device 82 is arranged at the plastic plate 20 by means of mounting means 84, which can be any known appropriate mounting means such as cable straps for example, and comprises a winding-up roller to enlarge and shorten the length of cables 62 of the Bowden cables 60. In operation a passenger simply activates a control (not shown) for the main electric device 82 and the winding-up or winding-down is perform by an electrically driven actuator of the winding-up roller. This facilitates operation of the lumbar support system 80 and enhances comfort for the passenger.

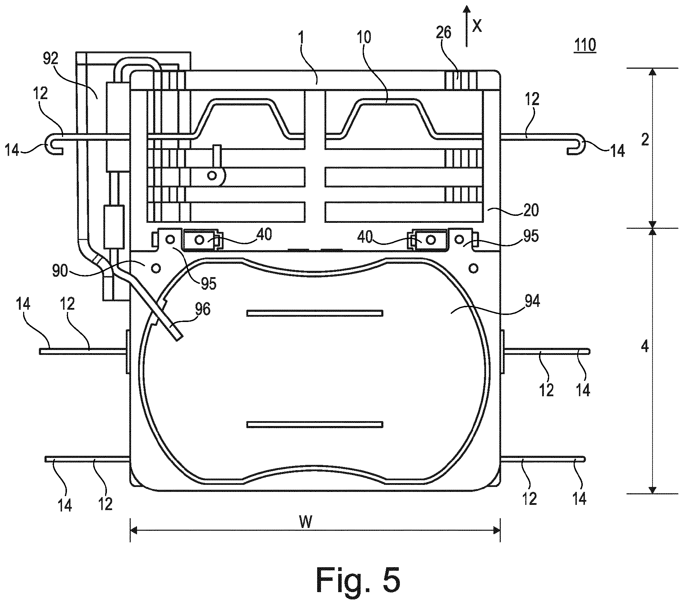

Fig. 5 shows another embodiment of a backrest support 110 comprising a pneumatic lumbar support system 90. Thereby, the suspension mat 1 is the same as the one without any lumbar support system 70, 80, 90, i.e. the suspension mat 1 is fully suspended to the vehicle seat 100 frame by the extensions 12 of the wire springs 10 only.

The terminals 30, however, do not negatively affect neither the arrangement of a pneumatic lumbar support system 90 nor the suspension of the suspension mat 1 by the extensions 12 of the wire springs 10. Due to the fact that the terminals 30, as well as the second plastic attachment means 50, are arranged at the back side 28 of the plastic plate 20 they do not interfere with the bladder 94 of the pneumatic lumbar support system 90 that is arranged at the front side or passenger facing side of the plastic plate 20. Moreover, as can be seen best from Fig. 6b, in case the suspension is made by the extension 12 of the central wire spring 10, the terminal 30 does not affect the suspension at all for the wire spring 10 with its extension 12 simply goes through the terminal 30.

Further, the two terminals 30 are arranged at the plastic plate 20 at positions where the extensions 12 of the central wire spring 10 extend from the plastic plate 20. Thus, the terminals 30 and the central wire spring 10 are arranged very close to each other. This allows that with the same suspension mat 1 and the same attachment means seat providers can easily change the backrest support and its functionalities without the necessity to add any new attachment means according to the desired functionality.

The pump unit 92 of the pneumatic lumbar system 90 that is necessary to at least inflate the bladder 94 is preferably arranged at the back side 28 of the plastic plate 20 on a lateral side 22, 24 in the dorsal region 2 without inferring the flexibility of the suspension mat 1 in this region. Said bladder 94 is deflated by a corresponding valve (not shown). The pump unit 92 can also be a combined pump-valve unit in another embodiment for inflating and deflating the bladder 94. In any case, the pump unit 92 provides pressurized air to the at least one bladder 94 via an air channel 96 to quickly inflate the bladder 94. In another embodiment there might be several bladders all connected individually to a pump unit 92 via air channels 96.

The bladder 94 is preferably made of any flexible plastic material suitable for forming a bladder. At its upper end in Fig. 5, the bladder 94 comprises attachment links 95 for attaching the bladder 94 to the suspension mat 1. Thereby, the arrangement of the bladder 94 with the suspension mat 1 is fixed and a stable backrest support 110 is formed.

In more detail, the bladder 94 is fixed with its attachment links 95 to the suspension mat 1 by means of first plastic attachment means 40. In one embodiment the first plastic attachment means 40 are realized as a living hinge as can be seen best in Figs. 7a, 7b. During installation, at first, the attachment links 95 are arranged at the corresponding spots of the plastic plate 20 and then a moving part 41, 41^{∗} of each living hinge is moved from a receiving position 41 into a mounting position 41^{∗} by pivoting it around 180°. As a result the attachment links 95 are pinched or clipped to the suspension mat 1. Moreover, in a preferred embodiment the attachment links 95 each comprise a hole at the center and fixation means 44 at each moving part 41, 41^{∗} are inserted into the corresponding hole when the moving part 41, 41^{∗} is moved from the receiving position 41 to the mounting position 41^{∗}. In the receiving position 41 the fixation means 44 face away from the plastic plate 20 as also shown in Fig. 5. In the mounting position 41^{∗} the fixation means face in direction to the plastic plate 20, and secures the connection between the bladder 94 and the suspension mat 1.

Finally, latching means 42 at each moving part 41, 41^{∗} protrude away from the plastic plate 20 in the receiving position 41, but fit into a corresponding recess 46 at the plastic plate 20 in the mounting position 41^{∗} to latch the moving part there. By said latching, any unwanted opening of the connection between the bladder 94 and the suspension mat 1 is prevented. For releasing the connection, a worker simply releases the latching at recess 46 and pivots the moving part 41, 41^{∗} of the living hinge back to the receiving position 41. No additional attachment means are necessary. Moreover, the first plastic attachment means 40 are integrally formed with the plastic plate 20 in one processing step.

Figs. 9a and 9b show the same embodiment of a suspension mat 1 as in Fig. 2a, however, in a perspective view. Thereby, the extensions 12 of the wire springs 10 are at first flat (see Fig. 9a) as it is the case directly after molding the plastic plate 20 and the attachment means 30, 40, 50. The over-molding of flat and preferably equally shaped wire springs 10 has the advantage of a facilitated manufacturing because only one molding form has to be used and the over-molding can be performed in one molding step.

After the molding procedure, each of the wire springs 10 can be bend arbitrarily as it is desired for a specific backrest support 110 configuration (see Fig. 9b). Thereby, for example, hooks 14 can be formed at the ends of the extensions 12 for integrating the suspension mat 1 into a vehicle seat 100 frame later on. Additionally, the complete extensions 12 can be bend to form bend extensions 16 in order to provide a certain desired fixed configuration for the suspension mat 1.

Thus, in the present invention the same basic structure of a suspension mat 1 can be used to provide different types of backrest supports 110:
a fix suspension mat 1 configuration for use without any lumbar support system 70, 80, 90 to provide a fix backrest support 110,
a fix suspension mat 1 configuration for use with a pneumatic lumbar support system 90 to provide one type of an adjustable backrest support 110, or
an adjustable suspension mat 1 configuration with a manually or electrically adjusted lumbar support system 70, 80 to provide two other types of adjustable back rest supports 110.

Furthermore, the manufacturing of a suspension mat is greatly facilitated by using unbend and preferably equally shaped wire springs in the over-molding procedure such that only one molding from is necessary. Only after the over-molding procedure extensions of the wire springs are bend to adapt the suspension mat configuration to specific vehicle seat and/or lumbar support system configurations.

### List of reference signs

- 1: suspension mat
- 2: dorsal region
- 4: lumbar region
- 10: wire springs
- 12: extensions
- 14: hook-shaped extension
- 16: bend extension
- 18: cut and bend extension
- 20: plastic plate
- 22: first lateral side
- 24: second lateral side
- 25: openings
- 26: ripples
- 27: stabilizer
- 28: back side
- 30: termimal
- 32: slot
- 34: receptacle
- 40: first plastic attachment means
- 41: moving part (receiving position)
- 41^{∗}: moving part (mounting position)
- 42: latching means
- 44: fixation means
- 46: recess
- 50: second plastic attachment means
- 52: securing nose
- 54: release nose
- 56: conduit receptacle
- 60: Bowden cable
- 62: cable
- 64: conduit
- 66: hook
- 70: manual adjuster
- 72: main manual device
- 80: electric adjuster
- 82: main electric device
- 84: mounting means
- 90: pneumatic lumbar support system
- 92: pump unit
- 94: bladder
- 95: attachment links
- 96: air channel
- 100: vehicle seat
- 102: backrest
- 104: seating area
- 110: backrest support
- W: width
- X: vertical upward direction

## Claims

1. Suspension mat (1) for integration into a vehicle seat (100), comprising:
a. a set of wire springs (10);
b. a plastic plate (20) over-molded over the wire springs (10); and
c. first plastic attachment means (40) integrally formed with the plastic plate (20) for mounting a bladder (94) of a pneumatic lumbar support system (90);
d. wherein at least two wire springs (10) extend over the width (W) of the plastic plate (20) and form attachment hooks (14) for suspending the suspension mat (1) into a vehicle seat (100) frame.

2. Suspension mat according to claim 1, wherein only two wire springs (10) extend over the width (W) of the plastic plate (20) and at least one central wire spring (10) does not extend over the width (W) of the plastic plate (20) such that Bowden cables (60) of a manual or electric lumbar support system (70, 80) can be attached to the suspension mat (1).

3. Suspension mat according to one of claims 1 - 2, wherein the first attachment means (40) comprise a living hinge with a moving part (41) that is pivotable around 180° from a receiving position (41) to a mounting position (41^{∗}).

4. Suspension mat according to one of claims 1 - 3, wherein the suspension mat (1) further comprises at least a pair of plastic terminals (30) integrally formed with the plastic plate (20) on opposing sides (22, 24) of the plastic plate (20) for mounting conduit (64) ends of Bowden cables (60) of a manual or electric lumbar support system (70, 80).

5. Suspension mat according to claim 4, wherein the terminals (30) comprise a cylinder-shaped receptacle (34) and a slot (32) along their length for mounting the conduit (64) and cable (62) of the Bowden cables (60).

6. Suspension mat according to one of claims 1 - 5, wherein the suspension mat (1) further comprises injection-molded hook-shaped second attachment means (50) for securing the conduits (64) of the Bowden cables (60) of the manual or electric lumbar support system (70, 80) to the plastic plate (20).

7. Backrest support (110) for integration into a vehicle seat (100), the backrest support (110) comprising a suspension mat (1) according to one of claims 1-6 and
a. a pneumatic lumbar support system (90) at least comprising a bladder (94) and a pump unit (92) for providing pressurized air to the bladder (94), wherein the bladder (94) is attached to the suspension mat (1) by means of the first plastic attachment means (40); or
b. a manual lumbar support system (70) at least comprising a main manual device (72) for adjusting Bowden cables and two Bowden cables (60), wherein conduit (64) ends of the Bowden cables (60) are attached to the suspension mat (1) by means of the plastic terminals (30); or
c. an electric lumbar support system (80) at least comprising a main electric device (82) for adjusting Bowden cables and two Bowden cables (60), wherein conduit (64) ends of the Bowden cables (60) are attached to the suspension mat (1) by means of the plastic terminals (30).

8. Method of manufacturing a suspension mat (1) for integration into a vehicle seat (100), the method comprising the following steps:
a. providing a set of wire springs (10);
b. over-molding the wire springs (10) with a plastic material to form a plastic plate (20), such that extensions (12) of the wire springs (10) extend over the plastic plate (20);
c. after the over-molding step, bending end portions of the extensions (12) to form hooks (14) for suspending the suspension mat (1) within a vehicle seat (100) frame.

9. Method according to claim 8, further comprising the following step:
d. simultaneously to step b., over-molding the extensions (12) of the wire springs (10) with a plastic material to form a plastic cover of the extensions (12).

10. Method according to one of the claims 8 - 9, further comprising the following steps:
e. simultaneously to step b., injection-molding of a plastic material to form plastic terminals (30) for mounting conduit (64) ends of Bowden cables (60) to the suspension mat (1); and
f. simultaneously to step b., injection-molding of a plastic material to form first plastic attachment means (40) for mounting at least one bladder (94) of a pneumatic lumbar support system (90) to the suspension mat (1).

11. Method of manufacturing a suspension mat (1) for integration into a vehicle seat (100), the method comprising the following steps:
a. providing a set of wire springs (10);
b. over-molding the wire springs (10) with a plastic material to form a plastic plate (20), wherein at least two of the wire springs (10) extend over the width (W) of the plastic plate (20) and form attachment hooks (14) for suspending the suspension mat (1) into a vehicle seat (100) frame; and
c. simultaneously to step b., injection-molding of a plastic material to form first plastic attachment means (40) for mounting at least one bladder (94) of a pneumatic lumbar support system (90) to the suspension mat (1).

12. Method according to one of the claims claim 8 - 11, wherein the method further comprises the step of cutting a wire spring (10) essentially to the width (W) of the plastic plate (20) for replacing the corresponding suspension by Bowden cables (60).

13. Method according to one of claims 8 - 12, the method further comprising the step of clipping the at least one bladder (94) of the pneumatic lumbar support system (90) to the suspension mat (1) by pivoting a moving part (41) of the first plastic attachment means (40) around 180° from a receiving position (41) to a mounting position (41*).

14. Method according to one of claims 8 - 13, the method further comprising, simultaneously with step b., the step of injection-molding a plastic material to form second plastic attachment means (50) for securing conduits (64) of the Bowden cables (60) to the suspension mat (1); and / or
simultaneously to step b., injection-molding of a plastic material to form plastic terminals (30) for mounting conduit (64) ends of Bowden cables (60) to the suspension mat (1).

## Patentansprüche

1. Federungsmatte (1) zur Integration in einen Fahrzeugsitz (100), umfassend:
a. einen Satz von Drahtfedern (10);
b. eine Kunststoffplatte (20), die über die Drahtfedern (10) überspritzt ist; und
c. erste Kunststoffbefestigungsmittel (40), die integral mit der Kunststoffplatte (20) ausgebildet sind, um eine Blase (94) eines pneumatischen Lendenstützsystems (90) zu montieren;
d. wobei sich mindestens zwei Drahtfedern (10) über die Breite (W) der Kunststoffplatte (20) erstrecken und Befestigungshaken (14) bilden, um die Federungsmatte (1) in einen Rahmen eines Fahrzeugsitzes (100) einzuhängen.

2. Federungsmatte gemäß Anspruch 1, wobei sich nur zwei Drahtfedern (10) über die Breite (W) der Kunststoffplatte (20) erstrecken und sich mindestens eine zentrale Drahtfeder (10) nicht über die Breite (W) der Kunststoffplatte (20) erstreckt, so dass Bowdenzüge (60) eines manuellen oder elektrischen Lendenstützsystems (70, 80) an der Federungsmatte (1) befestigt werden können.

3. Federungsmatte gemäß einem der Ansprüche 1-2, wobei die ersten Befestigungsmittel (40) ein Filmscharnier mit einem beweglichen Teil (41) umfassen, das um 180° von einer Aufnahmeposition (41) zu einer Montageposition (41^{∗}) schwenkbar ist.

4. Federungsmatte gemäß einem der Ansprüche 1-3, wobei die Federungsmatte (1) ferner mindestens ein Paar Kunststoffanschlüsse (30) umfasst, die integral mit der Kunststoffplatte (20) auf gegenüberliegenden Seiten (22, 24) der Kunststoffplatte (20) ausgebildet sind, um Enden der Leitungen (64) von Bowdenzügen (60) eines manuellen oder elektrischen Lendenstützsystems (70, 80) zu montieren.

5. Federungsmatte gemäß Anspruch 4, wobei die Anschlüsse (30) eine zylinderförmige Aufnahme (34) und einen Schlitz (32) entlang ihrer Länge zum Montieren der Leitung (64) und des Kabels (62) der Bowdenzüge (60) umfassen.

6. Federungsmatte gemäß einem der Ansprüche 1-5, wobei die Federungsmatte (1) ferner spritzgegossene, hakenförmige zweite Befestigungsmittel (50) zum Sichern der Leitungen (64) der Bowdenzüge (60) des manuellen oder elektrischen Lendenstützsystems (70, 80) an der Kunststoffplatte (20) umfasst.

7. Rückenlehnenstütze (110) zur Integration in einen Fahrzeugsitz (100), wobei die Rückenlehnenstütze (110) eine Federungsmatte (1) gemäß einem der Ansprüche 1-6 umfasst und
a. ein pneumatisches Lendenstützsystem (90), das mindestens eine Blase (94) und eine Pumpeneinheit (92) zum Bereitstellen von Druckluft an die Blase (94) umfasst, wobei die Blase (94) mittels der ersten Kunststoffbefestigungsmittel (40) an der Federungsmatte (1) befestigt ist; oder
b. ein manuelles Lendenstützsystem (70), das mindestens eine manuelle Hauptvorrichtung (72) zum Einstellen von Bowdenzügen und zwei Bowdenzügen (60) umfasst, wobei Enden der Leitungen (64) der Bowdenzüge (60) mittels der Kunststoffanschlüsse (30) an der Federungsmatte (1) befestigt sind; oder
c. ein elektrisches Lendenstützsystem (80), das mindestens eine elektrische Hauptvorrichtung (82) zum Einstellen von Bowdenzügen und zwei Bowdenzügen (60) umfasst, wobei Enden der Leitungen (64) der Bowdenzüge (60) mittels der Kunststoffanschlüsse (30) an der Federungsmatte (1) befestigt sind.

8. Verfahren zur Herstellung einer Federungsmatte (1) zur Integration in einen Fahrzeugsitz (100), wobei das Verfahren die folgenden Schritte umfasst:
a. Bereitstellen eines Satzes von Drahtfedern (10);
b. Überspritzen der Drahtfedern (10) mit einem Kunststoffmaterial, um eine Kunststoffplatte (20) zu bilden, sodass sich Verlängerungen (12) der Drahtfedern (10) über die Kunststoffplatte (20) hinaus erstrecken;
c. nach dem Schritt des Überspritzens, Biegen von Endabschnitten der Verlängerungen (12), um Haken (14) zum Einhängen der Federungsmatte (1) in einen Rahmen eines Fahrzeugsitzes (100) zu bilden.

9. Verfahren gemäß Anspruch 8, ferner umfassend den folgenden Schritt:
d. gleichzeitig zu Schritt b., Überspritzen der Verlängerungen (12) der Drahtfedern (10) mit einem Kunststoffmaterial, um eine Kunststoffbeschichtung der Verlängerungen (12) zu bilden.

10. Verfahren gemäß einem der Ansprüche 8-9, ferner umfassend die folgenden Schritte:
e. gleichzeitig zu Schritt b., Spritzgießen eines Kunststoffmaterials, um Kunststoffanschlüsse (30) zum Montieren von Enden der Leitungen (64) von Bowdenzügen (60) an der Federungsmatte (1) zu bilden; und
f. gleichzeitig zu Schritt b., Spritzgießen eines Kunststoffmaterials, um erste Kunststoffbefestigungsmittel (40) zum Montieren mindestens einer Blase (94) eines pneumatischen Lendenstützsystems (90) an der Federungsmatte (1) zu bilden.

11. Verfahren zur Herstellung einer Federungsmatte (1) zur Integration in einen Fahrzeugsitz (100), wobei das Verfahren die folgenden Schritte umfasst:
a. Bereitstellen eines Satzes von Drahtfedern (10);
b. Überspritzen der Drahtfedern (10) mit einem Kunststoffmaterial, um eine Kunststoffplatte (20) zu bilden, wobei sich mindestens zwei der Drahtfedern (10) über die Breite (W) der Kunststoffplatte (20) hinaus erstrecken und Befestigungshaken (14) bilden, um die Federungsmatte (1) in einen Rahmen eines Fahrzeugsitzes (100) einzuhängen; und
c. gleichzeitig zu Schritt b., Spritzgießen eines Kunststoffmaterials, um erste Kunststoffbefestigungsmittel (40) zum Montieren mindestens einer Blase (94) eines pneumatischen Lendenstützsystems (90) an der Federungsmatte (1) zu bilden.

12. Verfahren gemäß einem der Ansprüche 8-11, wobei das Verfahren ferner den Schritt des Abschneidens einer Drahtfeder (10) im Wesentlichen auf die Breite (W) der Kunststoffplatte (20) zum Ersetzen der entsprechenden Federung durch Bowdenzüge (60) umfasst.

13. Verfahren gemäß einem der Ansprüche 8-12, wobei das Verfahren ferner den Schritt des Anklipsens der mindestens einen Blase (94) des pneumatischen Lendenstützsystems (90) an der Federungsmatte (1) durch Schwenken eines beweglichen Teils (41) der ersten Kunststoffbefestigungsmittel (40) um 180° von einer Aufnahmeposition (41) zu einer Montageposition (41^{∗}) umfasst.

14. Verfahren gemäß einem der Ansprüche 8-13, wobei das Verfahren ferner gleichzeitig mit Schritt b. den Schritt des Spritzgießens eines Kunststoffmaterials umfasst, um zweite Kunststoffbefestigungsmittel (50) zum Sichern von Leitungen (64) der Bowdenzüge (60) an der Federungsmatte (1) zu bilden; und/oder
gleichzeitig zu Schritt b., Spritzgießen eines Kunststoffmaterials, um Kunststoffanschlüsse (30) zum Montieren von Enden der Leitungen (64) von Bowdenzügen (60) an der Federungsmatte (1) zu bilden.

## Revendications

1. Appui à suspension (1) destiné à être intégré dans un siège de véhicule (100), comprenant :
a. un ensemble de ressorts en fil (10) ;
b. une plaque en plastique (20) surmoulée par-dessus les ressorts en fil (10) ; et
c. des premiers moyens de fixation en plastique (10) formés d'une seule pièce avec la plaque en plastique (20) pour le montage d'une vessie (94) d'un système de soutien lombaire pneumatique (90) ;
d. dans lequel au moins deux ressorts en fil (10) s'étendent sur toute la largeur (W) de la plaque en plastique (20) et forment des crochets de fixation (14) pour suspendre l'appui à suspension (1) dans un cadre de siège de véhicule (100).

2. Appui à suspension selon la revendication 1, dans lequel seulement deux ressorts en fil (10) s'étendent sur toute la largeur (W) de la plaque en plastique (20), et au moins un ressort en fil central (10) ne s'étend pas sur toute la largeur (W) de la plaque en plastique (20) de manière à pouvoir monter sur l'appui à suspension (1)des câbles Bowden (60) d'un système manuel ou électrique de soutien lombaire (70, 80).

3. Appui à suspension selon l'une des revendications 1 à 2, dans lequel les premiers moyens de fixation (40) comprennent une charnière vive avec une partie mobile (41) qui peut pivoter sur 180° depuis une position de réception (41) jusqu'à une position de montage (41*).

4. Appui à suspension selon l'une des revendications 1 à 3, dans lequel l'appui à suspension (1) comprend en outre une paire de terminaisons en plastique (30) formées d'une seule pièce avec la plaque en plastique (20) sur des côtés opposés (22, 24) de la plaque en plastique (20) pour le montage d'extrémités de gaine (64) de câbles Bowden (60) d'un système manuel ou électrique (70, 80) de soutien lombaire.

5. Appui à suspension selon la revendication 4, dans lequel les terminaisons (30) comprennent un réceptacle en forme de cylindre (34) et une fente (32) sur toutes leur longueur, pour le montage de la gaine (64) et du câble (62) des câbles Bowden (60).

6. Appui à suspension selon l'une des revendications 1 à 5, dans lequel l'appui à suspension (1) comprend en outre des seconds moyens de fixation en forme de crochet moulés par injection (50) pour assujettir à la plaque en plastique (20) les gaines (64) des câbles Bowden (60) du système manuel ou électrique de soutien lombaire (70, 80) .

7. Support de dosseret (110) destiné à être intégré dans un siège de véhicule, le support de dosseret (110) comprenant un appui à suspension (1) selon l'une des revendications 1 à 6 et
a. un système pneumatique de soutien lombaire (90) comprenant au moins une vessie (94) et une unité de pompage (92) pour délivrer de l'air sous pression à la vessie (94), la vessie (94) étant solidarisée à l'appui à suspension (1) au moyen des premiers moyens de fixation en plastique (40) ; ou
b. un système manuel de soutien lombaire (70) comprenant au moins un dispositif manuel principal (72) pour ajuster des câbles Bowden, et deux câbles Bowden (60), les extrémités de gaine (64) des câbles Bowden (60) étant fixées à l'appui à suspension (1) au moyen des terminaisons en plastique (30) ; ou
c. un système électrique de soutien lombaire (80) comprenant au moins un dispositif électrique principal (82) pour l'ajustement de câbles Bowden, et deux câbles Bowden (60), les extrémités de gaine (64) des câbles Bowden (60) étant fixées à l'appui à suspension (1) au moyen des terminaisons en plastique (30).

8. Procédé de fabrication d'un appui à suspension (1) destiné à être intégré dans un siège de véhicule (100), le procédé comprenant les étapes suivantes :
a. l'obtention d'un ensemble de ressorts en fil (10) ;
b. le surmoulage des ressorts en fil (10) avec une matière plastique pour former une plaque en plastique (20), de manière que des prolongements (12) des ressorts en fil (10) s'étendent au-dessus de la plaque en plastique (20) ;
c. après l'étape de surmoulage, le cintrage de parties d'extrémité des prolongements (12) pour former des crochets (14) pour suspendre l'appui à suspension (1) à l'intérieur d'un cadre de siège de véhicule (100).

9. Procédé selon la revendication 8, comprenant en outre l'étape suivante :
d. en même temps que l'étape b., le surmoulage des prolongements (12) des ressorts en fil (10) avec une matière plastique pour former un recouvrement en plastique des prolongements (12).

10. Procédé selon l'une des revendications 8 à 9, comprenant en outre les étapes suivantes :
e. en même temps que l'étape b., le moulage par injection d'une matière plastique pour former des terminaisons en plastique (30) pour le montage sur l'appui à suspension (1) d'extrémités de gaine (64) de câbles Bowden (60) ; et
f. en même temps que l'étape b., le moulage par injection d'une matière plastique pour former des premiers moyens de fixation en plastique (40) pour le montage sur l'appui à suspension (1) d'au moins une vessie (94) d'un système pneumatique de soutien lombaire (90) .

11. Procédé de fabrication d'un appui à suspension (1) destiné à être intégré dans un siège de véhicule (100), le procédé comprenant les étapes suivantes :
a. l'obtention d'un ensemble de ressorts en fil (10) ;
b. le surmoulage des ressorts en fil (10) avec une matière plastique pour former une plaque en plastique (20), au moins deux des ressorts en fil (10) s'étendant sur toute la largeur (W) de la plaque en plastique (20) et formant des crochets de fixation (14) pour suspendre l'appui à suspension (1) dans un cadre de siège de véhicule (10) ; et
c. en même temps que l'étape b., le moulage par injection d'une matière plastique pour former des premiers moyens de fixation en plastique (40) pour le montage sur l'appui à suspension (1) d'au moins une vessie (94) d'un système pneumatique de soutien lombaire (90) .

12. Procédé selon l'une des revendications 8 à 11, dans lequel le procédé comprend en outre l'étape de découpe d'un ressort en fil (10) essentiellement à la largeur (W) de la plaque en plastique (20) pour remplacer la suspension correspondante par des câbles Bowden (60).

13. Procédé selon l'une des revendications 8 à 12, dans lequel le procédé comprend en outre l'étape d'emboîtement de l'au moins une vessie (94) du système pneumatique de soutien lombaire (90) sur l'appui à suspension (1) par pivotement d'une partie mobile (41) des premiers moyens de fixation en plastique (40) sur 180° depuis une position de réception (41) jusqu'à une position de montage (41*).

14. Procédé selon l'une des revendications 8 à 13, dans lequel le procédé comprend en outre, en même temps que l'étape b., l'étape de moulage par injection d'une matière plastique pour former des seconds moyens de fixation en plastique (50) pour assujettir à l'appui à suspension (1) des gaines (64) de câbles Bowden (60) ; et/ou
en même temps que l'étape b., le moulage par injection d'une matière plastique pour former des terminaisons en plastique (30) pour monter sur l'appui à suspension (1) des extrémités de gaine (64) de câbles Bowden (60).
